# EUROPÄISCHE PATENTSCHRIFT

(11) **EP 1 252 695 B1**
(45) Veröffentlichungstag und Bekanntmachung des Hinweises auf die Patenterteilung: **17.09.2003**
(21) Anmeldenummer: 01902298.7
(22) Anmeldetag: 09.01.2001
(51) Int. Cl.: H02H 3/02, E04G 21/08

(54) **SCHUTZVORRICHTUNG FÜR EINEN ELEKTRISCHEN VERBRAUCHER**
PROTECTIVE DEVICE FOR AN ELECTRIC CONSUMER
DISPOSITIF DE PROTECTION POUR UN CONSOMMATEUR ELECTRIQUE

(30) Priorität: 25.01.2000 DE 10003064
(43) Veröffentlichungstag der Anmeldung: 30.10.2002
(73) Patentinhaber: Wacker Construction Equipment AG, 80809 München (DE)
(72) Erfinder: STEFFEN, Michael, 82131 Stockdorf (DE)
(74) Vertreter: Hoffmann, Jörg Peter, Dr. Ing.
(86) Internationale Anmeldenummer: EP0100171
(87) Internationale Veröffentlichungsnummer: WO01056129

(56) Entgegenhaltungen:
- GB-A- 2 181 599
- US-A- 5 864 455

## Beschreibung

Die Erfindung betrifft eine Schutzvorrichtung für einen elektrischen Verbraucher gemäß dem Oberbegriff von Patentanspruch 1.

Elektrowerkzeuge, wie z. B. Handbohrmaschinen, werden häufig doppelt-schutzisoliert ausgeführt, d. h., daß neben einer Primärisolation im Motor selbst eine weitere zweite Isolation, z. B. in Form eines isolierenden Gehäuses, vorgesehen wird. Es sind jedoch auch elektrische Maschinen bekannt, bei denen eine doppelte Schutzisolierung nicht möglich ist, weil z. B. das äußere Gehäuse aus Metall bestehen muß. Um hierbei die erforderliche Sicherheit für den Bediener zu gewährleisten, werden häußg sogenannte Fehlerstrom-Schutzschalter, wie z. B. allgemein bekannte FI-Schalter, vorgesehen, die in der Lage sind, einen Fehlerstrom zu detektieren und gegebenenfalls sofort die Stromzufuhr zu dem Elektrogerät zu unterbrechen. In einigen Ländern besteht daher die Vorschrift, derartige Schutzschalter in Schaltschränken und Verteilern vorzusehen. In den meisten Ländern jedoch besteht eine derartige Vorschrift nicht.

Die dadurch entstehenden Probleme können teilweise durch eine Schutzeinrichtung (Personenschutzschalter PRCD-S der Fa. KOPP) gelöst werden, mit der ein Fehlerstrom-Schutzschalter in die Zuleitung zum Verbraucher eingebaut werden kann.

Des weiteren sind elektrische Geräte bekannt, bei denen die von außen über einen Netzanschluß zugeführte elektrische Energie in einem Energiespeicher, z. B. einem Kondensator, der z. B. Bestandteil eines Frequenzumformers sein kann, zwischengespeichert und erst mit zeitlicher Verzögerung weitergeleitet wird. Bei derartigen Geräten kann die Schutzwirkung durch den Fehlerstrom-Schutzschalter versagen, da die Energiespeicher oft mit einer derart hohen Kapazität ausgestattet sind, daß sie - trotz unterbrochener Stromzuführung von außen - noch genügend Energie speichern, um den Bediener ernsthaft zu gefährden. Das bedeutet, daß auch bei im Stromverteiler vorgesehenem Fehlerstrom-Schutzschalters ein voll wirksamer Schutz des Bedieners nicht immer gewährleistet werden kann.

Dokument GB 2181599 A zeigt eine Schutzvorrichtung, die in die Zuleitung zwischen einem Netzanschluss und einem elektrischen Verbraucher integrierbar ist und die sowohl einen mechanischen Unterbrecher als auch einen elektrischen Unterbrecher aufweist. Der elektrische Unterbrecher dient dazu, den Unterbrechungsvorgang zu beschleunigen, da der elektrische Unterbrecher eine geringere Schaltzeit als der mechanische Unterbrecher aufweist.

Der Erfindung liegt die Aufgabe zugrunde, eine Schutzvorrichtung für einen elektrischen Verbraucher anzugeben, die das Entstehen von Fehlerströmen wirksam auch dann vermeidet, wenn keine entsprechende Schutzeinrichtung im Stromnetz vorhanden ist bzw. das den elektrischen Verbraucher aufweisende Gerät mit einem Energiespeicher versehen ist, in dem der vom Netz zugeführte Strom zwischengespeichert wird.

Erfindungsgemäß wird die Aufgabe durch eine Schutzvorrichtung mit den Merkmalen von Patentanspruch 1 gelöst. Vorteilhafte Weiterentwicklungen der Erfindung sind den abhängigen Ansprüchen zu entnehmen.

Bei der erfindungsgemäßen Schutzvorrichtung ist in einer einen Netzanschluß mit einem elektrischen Verbraucher verbindenden Zuleitung ein Fehlerstrom-Schutzschalter zwischen dem Netzanschluß und einer Schalteinrichtung angeordnet. Der Fehlerstrom-Schutzschalter weist eine Detektionseinrichtung zum Erkennen eines Fehlerstroms auf, sowie einen ersten Unterbrecher zum Unterbrechen einer Stromzufuhr vom Netzanschluß zur Schalteinrichtung in Abhängigkeit von einem Schaltsignal von der Detektionseinrichtung. Weiterhin ist stromab von dem ersten Unterbrecher, näher beim Verbraucher, ein zweiter Unterbrecher vorgesehen, der durch das Schaltsignal von der Detektionseinrichtung schaltbar ist. Vorteilhafterweise ist der erste Unterbrecher derart angeordnet, daß er die Stromzufuhr vom Netzanschluß zu dem Fehlerstrom-Schutzschalter unterbrechen kann. Da der zweite Unterbrecher näher am Verbraucher angeordnet ist, schützt er diesen und den Bediener besser, als das durch den ersten Unterbrecher allein möglich ist. Dies gilt insbesondere dann, wenn der zweite Unterbrecher auf elektronischem Wege die Stromzufuhr trennt.

Indem auf diese Weise im Bereich der Stromzuleitung zu dem elektrischen Gerät bzw. direkt am Netzstecker der Fehlerstrom-Schutzschalter angeordnet wird, kann er bei Feststellen eines Fehlerstroms sofort den elektrischen Verbraucher und damit das gesamte elektrische Gerät stromlos schalten. Dadurch kann fast das gesamte Gerät vor Fehlerströmen geschützt werden, auch wenn in den zum Netz gehörenden Stromverteilern kein Fehlerstrom-Schutzschalter vorhanden ist.

Die Bereitstellung des zweiten Unterbrechers eignet sich besonders für elektrische Geräte, bei denen ein Energiespeicher zum Zwischenspeichern von elektrischer Energie im Bereich der Schalteinrichtung, z. B. als Bestandteil eines Frequenzumformers vorgesehen ist. Wie oben bereits dargelegt, besteht bei derartigen Energiespeichern die Gefahr, daß sie trotz unterbrochener Netzstromzufuhr genug Energie speichern können, um den Bediener durch Fehlerströme zu gefährden. Dieses Problem kann auch dann noch bestehen, wenn bereits der erste Unterbrecher aktiviert worden ist.

Der Energiespeicher ist z. B. zwischen dem Fehlerstrom-Schutzschalter und der Schalteinrichtung angeordnet. Durch den zweiten Unterbrecher kann Jeglicher Stromfluß zu oder vom Energiespeicher unterbrochen werden. Die Detektionseinrichtung ist somit in der Lage, über das Schaltsignal nicht nur den ersten Unterbrecher anzusteuern, der das elektrische Gerät vom Netz nimmt, sondern auch den zweiten Unterbrecher, der möglichst dicht bei dem Energiespeicher angeordnet werden sollte. Tritt in diesem Fall z. B. an dem elektrischen Verbraucher ein Fehlerstrom auf, wird die Verbindung zum Netz, die Verbindung zum Energiespeicher und die Verbindung des Energiespeichers zum Ausgang des Leistungsteils (z. B. Endstufe eines Frequenzumformers) unterbrochen. Die im Energiespeicher gespeicherte Energie kann nicht mehr entweichen, wodurch eine Gefährdung des Bedieners ausgeschlossen wird.

Bei einer weiteren vorteilhaften Ausgestaltung der Erfindung sind der erste und/oder der zweite Unterbrecher nur dann geschlossen, wenn das Schaltsignal anliegt. Bei fehlendem Schaltsignal wird die elektrische Verbindung getrennt. Auf diese Weise ist sichergestellt, daß der Fehlerstrom-Schutzschalter ordnungsgemäß funktioniert und auch nicht vom Gerät entfernt worden ist. Bei fehlendem Fehlerstrom-Schutzschalter ist eine Inbetriebnahme des Geräts ausgeschlossen.

Diese und weitere Vorteile und Merkmale der Erfindung werden nachfolgend anhand eines Beispiels unter Zuhilfenahme der begleitenden Figur näher erläutert.

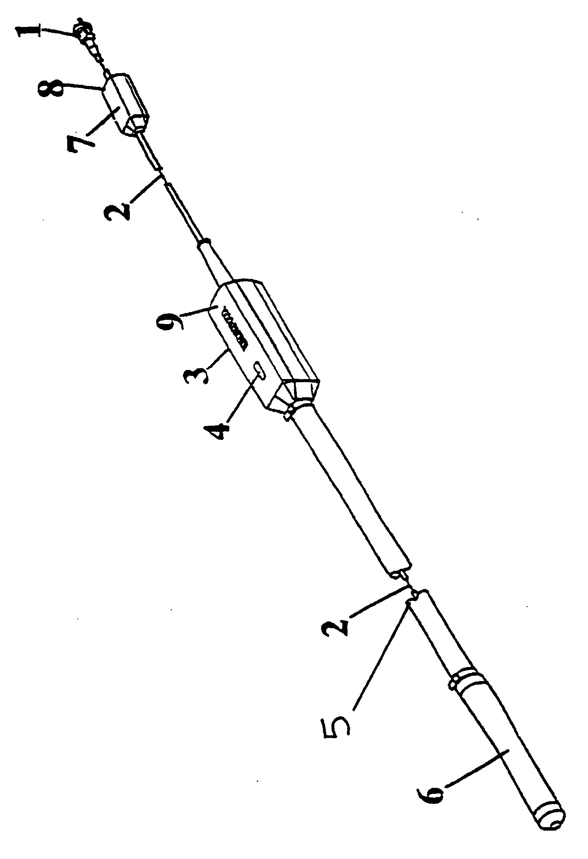

Die **einzige Figur** zeigt als Beispiel für ein elektrisches Gerät einen Innenrüttler zur Verdichtung von noch flüssigem Beton.

Der elektrische Strom wird an einem als Netzanschluß dienenden Netzstecker 1 in das Gerät eingeleitet und über eine Zuleitung 2 zu einer Schalteinrichtung 3 geführt. Die Schalteinrichtung 3 weist wenigstens einen Ein/Aus-Schalter 4 auf. Bei dem gezeigten Beispiel ist weiterhin in der Schalteinrichtung 3 ein nicht dargestellter, an sich bekannter Frequenzumformer mit einem als Energiespeicher dienenden Elektrolytkondensator vorgesehen.

Die Zuleitung 2 verläßt dann die Schalteinrichtung 3 und wird - ummantelt von einem Schutz- und Bedienungsschlauch 5 - zu einer Rüttelflasche 6 geführt. In der Rüttelflasche 6 ist ein als elektrischer Verbraucher dienender langgestreckter Elektromotor untergebracht, der eine ebenfalls in der Rüttelflasche 6 angeordnete Unwucht drehend antreibt, wodurch die für die Betonverdichtung erforderlichen Schwingungen des Rüttlers erzeugt werden können. Der Bediener führt dann die Rüttelflasche 6 an dem Schutz- und Bedienungsschlauch 5.

Der bisher beschriebene Innenrüttler ist allgemein bekannt und hat sich im harten Baustellenbetrieb bereits bestens bewährt.

Neu ist an dem in der Fig. gezeigten Innenrüttler ein in einem Gehäuse untergebrachter Fehlerstrom-Schutzschalter 7, der z. B. durch einen an sich bekannten FI-Schalter realisiert sein kann.

Bei einem derartigen FI-Schalter sind die Stromhin- und die Stromrückleitung gemeinsam von einem Eisenkern umgeben, der die magnetische Feldstärke der Leiter überwacht. Wenn der Stromhinleiter aufgrund eines Fehlerstroms einen stärkeren Strom führt, als der Stromrückleiter, entsteht trotz der Überlagerung der magnetischen Felder der beiden Leiter ein Differenzmagnetfeld, das durch den Eisenkern detektiert und dann in einer weiteren, an sich bekannten Schaltung in ein Schaltsignal gewandelt wird, das z. B. einem als Unterbrecher dienenden Relais zur Unterbrechung der Stromzufuhr zugeführt wird.

Der Fehlerstrom-Schutzschalter 7 besteht demnach aus einer Detektionseinrichtung, die das Vorhandensein eines Fehlerstroms erkennt und daraufhin ein Schaltsignal erzeugt bzw. ein vorhandenes Signal unterbricht, sowie einem ersten Unterbrecher 8, der die Stromzufuhr vom Netzstecker 1 zum Fehlerstrom-Schutzschalter 7 unterbricht und damit den gesamten Innenrüttler stromlos macht. Auf diese Welse kann insbesondere bei Anlagen, bei denen keine FI-Schalter in Schaltschränken oder Verteilern vorgesehen sind, eine Gefährdung des Bedienpersonals durch Fehlerströme reduziert werden.

Wie bereits beschrieben, weist der Innenrüttler in der Schalteinrichtung 3 einen Frequenzumformer auf, der einen Energiespeicher in Form eines Kondensators umfaßt. Auch wenn ein Fehlerstrom z. B. durch Abisolation der Zuleitung 2 in der Nähe der Rüttelflasche 6 auftritt und daraufhin der Fehlerstrom-Schutzschalter 7 das Gerät vom Netz nimmt, reicht die in dem Energiespeicher gespeicherte Energie aus, um weiterhin einen Fehlerstrom zu generieren, der den Bediener gefährden kann.

Um eine derartige Gefährdung zu vermeiden, ist ein zweiter Unterbrecher 9 vorgesehen, mit dem der Energlespeicher von den restlichen elektrischen Bauteilen, insbesondere der Zuleitung 2, abgetrennt werden kann. Der zweite Unterbrecher 9 wird ebenfalls über das Schaltsignal von der Detektionseinrichtung des Fehlerstrom-Schutzschalters 7 angesteuert und gewährleistet dadurch, daß bei Auftreten eines Fehlerstroms und der nachfolgenden Unterbrechung die Energie des Energiespeichers nicht abgegeben werden und somit den Bediener nicht gefährden kann. Der zweite Unterbrecher 9 sollte dabei derart aufgebaut sein, daß er den Energiespeicher vollständig von der Umgebung abtrennen kann, um auch ein Rückfließen des Stroms, z. B. in Richtung des Fehlerstrom-Schutzschalters 7, zu vermeiden. Um ein schnellstmögliches Ansprechen des zweiten Unterbrechers 9 zu erreichen, sollte er in dem Fachmann geläufiger Weise durch elektronische Bauteile realisiert werden.

Für die Zuführung des Schaltsignals von dem räumlich entfernten Fehlerstrom-Schutzschalter 7 zum zweiten Unterbrecher 9 ist eine Datenübertragungsstrecke vorgesehen. Diese kann z. B. aus einem oder mehreren parallel zur Zuleitung 2 verlaufenden Kabeln bestehen. Es ist aber auch möglich, ein auf den elektrischen Strom in der Zuleitung 2 aufmoduliertes Signal zu generieren oder eine kurze Unterbrechung der Stromzufuhr im Bereich von wenigen Millisekunden zu erzeugen, die von dem zweiten Unterbrecher 9 als Steuerimpuls verstanden wird. Schließlich ist auch noch eine Übertragung des Steuersignals mittels Lichtwellenleiter, Funksignalen oder jeder anderen Art von bekannter Signalübertragung denkbar.

Bei einer besonders sicheren Variante erlauben der erste und der zweite Unterbrecher 8, 9 lediglich dann einen Stromfluß, wenn das Schaltsignal auf einem hohen Pegel liegt. Fällt das Schaltsignal ab oder fehlt es ganz, z. B. wenn unbefugterweise der Fehlerstrom-Schutzschalter 7 vom Gerät entfernt worden ist, unterbinden die Unterbrecher 8, 9 eine Stromzufuhr. Durch eine derartige "Fail-safe"-Funktion läßt sich der Innenrüttler nur bei ordnungsgemäß funktionierendem Fehlerstrom-Schutzschalter in Betrieb nehmen.

## Patentansprüche

1. Schutzvorrichtung für einen elektrischen Verbraucher (6) mit
- einem Netzanschluß (1);
- einer Zuleitung (2) vom Netzanschluß (1) zum Verbraucher (6); und mit
- einer in der Zuleitung (2) vorgesehenen Schalteinrichtung (3) zum Ein- und Ausschalten des Verbrauchers (6);
wobei
- in der Zuleitung (2) zwischen dem Netzanschluß (1) und der Schalteinrichtung (3) ein Fehlerstrom-Schutzschalter (7) angeordnet ist;
- der Fehlerstrom-Schutzschalter (7) eine Detektionseinrichtung zum Erkennen eines Fehlerstroms aufweist, sowie einen ersten Unterbrecher (8) zum Unterbrechen einer Stromzufuhr vom Netzanschluß (1) zur Schalteinrichtung (3) in Abhängigkeit von einem Schaltsignal von der Detektionseinrichtung; und wobei
- stromab von dem ersten Unterbrecher (8), näher bei dem Verbraucher (6), und zusätzlich zu der Schalteinrichtung ein zweiter Unterbrecher (9) vorgesehen ist, der durch das Schaltsignal von der Detektionseinrichtung schaltbar ist und zum Unterbrechen eines Stromflusses zum Verbraucher dient.

2. Schutzvorrichtung nach Anspruch 1, **dadurch gekennzeichnet, daß** der erste Unterbrecher (8) zum Unterbrechen einer Stromzufuhr vom :Netzanschluß (1) zum Fehlerstrom-Schutzschalter (7) dient.

3. Schutzvorrichtung nach einem der Ansprüche 1 oder 2, **dadurch gekennzeichnet, daß** der Fehlerstrom-Schutzschalter (7) im Bereich des Netzanschlusses (1) angeordnet ist.

4. Schutzvorrichtung nach einem der Ansprüche 1 bis 3, **dadurch gekennzeichnet, daß** zwischen dem Fehlerstrom-Schutzschalter (7) und der Schalteinrichtung (3) ein Energiespeicher zum Zwischenspeichern von über den Netzanschluß zugeführter elektrischer Energie angeordnet ist.

5. Schutzvorrichtung nach Anspruch 4, **dadurch gekennzeichnet, daß** an dem Energiespeicher der zweite Unterbrecher (9) angeordnet ist, durch den jeglicher Stromfluß zu und/oder vom Energiespeicher unterbrochen werden kann.

6. Schutzvorrichtung nach einem der Ansprüche 4 oder 5, **dadurch gekennzeichnet, daß** der Energiespeicher Bestandteil eines Frequenzumformers ist.

7. Schutzvorrichtung nach einem der Ansprüche 1 bis 3, **dadurch gekennzeichnet, daß** der zweite Unterbrecher (9) beim Verbraucher (6) angeordnet ist.

8. Schutzvorrichtung nach einem der Ansprüche 1 bis 7, **dadurch gekennzeichnet, daß** das Schaltsignal über eine Datenübertragungsstrecke von der Detektionseinrichtung zum zweiten Unterbrecher (9) übertragbar ist.

9. Schutzvorrichtung nach einem der Ansprüche 1 bis 8, **dadurch gekennzeichnet, daß** bei fehlendem Schaltsignal die elektrische Verbindung durch den ersten und/oder den zweiten Unterbrecher (8, 9) getrennt wird.

10. Schutzvorrichtung nach einem der Ansprüche 1 bis 9, **dadurch gekennzeichnet, daß** der zweite Unterbrecher (9) ein elektronischer Unterbrecher ist.

## Claims

1. Protective device for an electric consumer (6) having
- a mains supply (1);
- a supply line (2) from the mains supply (1) to the consumer (6); and having
- a switching device (3) provided in the supply line (2) for the purpose of switching the consumer (6) on and off;
wherein
- a fault current protective switch (7) is disposed in the supply line (2) between the mains supply (1) and the switching device (3);
- the fault current protective switch (7) comprises a detection device for the purpose of detecting a fault current, as well as a first circuit breaker (8) for the purpose of interrupting a supply of current from the mains supply (1) to the switching device (3) dependant upon a switching signal from the detection device; and wherein
- a second circuit breaker (9) is provided downstream from the first circuit breaker (8) closer to the consumer (6) and in addition to the switching device, which second circuit breaker can be switched by virtue of the switching signal from the detection device and serves for interrupting a flow of current to the consumer.

2. Protective device as claimed in Claim 1, **characterised in that** the first circuit breaker (8) serves for interrupting a supply of current from the mains supply (1) to the fault current protective switch (7).

3. Protective device as claimed in any one of Claims 1 or 2, **characterised in that** the fault current protective switch (7) is disposed in the region of the mains supply (1).

4. Protective device as claimed in any one of Claims I to 3, **characterised in that** an energy storage device is disposed between the fault current protective switch (7) and the switching device (3) for the purpose of temporarily storing electric energy supplied via the mains supply.

5. Protective device as claimed in Claim 4, **characterised in that** the second circuit breaker (9) is disposed on the energy storage device so that any flow of current to and/or from the energy storage device can be interrupted.

6. Protective device as claimed in any one of Claims 4 or 5, **characterised in that** the energy storage device is a component part of a frequency converter.

7. Protective device as claimed in any one of Claims 1 to 3, **characterised in that** the second circuit breaker (9) is disposed by the consumer (6).

8. Protective device as claimed in any one of Claims 1 to 7, **characterised in that** the switching signal can be transmitted via a data transmission link from the detection device to the second circuit breaker (9).

9. Protective device as claimed in any one of Claims 1 to 8, **characterised in that** in the event of a faulty switching signal the electrical connection is disconnected by means of the first and/or second circuit breaker (8, 9).

10. Protective device as claimed in any one of Claims 1 to 9, **characterised in that** the second circuit breaker (9) is an electronic circuit breaker.

## Revendications

1. Dispositif de protection pour un récepteur électrique (6) comportant :
- un branchement secteur (1) ;
- une ligne d'arrivée (2) du branchement secteur (1) au secteur (6) ; et comportant
- un dispositif de commutation (3) prévu dans la ligne d'arrivée (2) pour la mise en marche et la mise à l'arrêt du récepteur (6) ;
dans lequel
- un disjoncteur de protection pour courant de défaut (7) est disposé dans la ligne d'arrivée (2) entre le branchement secteur (1) et le dispositif de commutation (3) ;
- le disjoncteur de protection pour courant de défaut (7) comporte un dispositif de détection pour détecter un courant de défaut, ainsi qu'un premier sectionneur (8) pour interrompre une arrivée de courant du branchement secteur (1) du dispositif de commutation (3) en fonction d'un signal de commutation du dispositif de détection ; et dans lequel
- il est prévu en aval du premier sectionneur (8), plus près du récepteur (6), et outre le dispositif de commutation, un deuxième sectionneur (9) qui peut être commuté par le signal de commutation du dispositif de détection et qui sert à interrompre une arrivée de courant au récepteur.

2. Dispositif de protection selon la revendication 1, **caractérisé en ce que** le premier sectionneur (8) sert à interrompre une arrivée de courant du branchement secteur (1) au disjoncteur de protection pour courant de défaut (7).

3. Dispositif de protection selon la revendication 1 ou 2, **caractérisé en ce que** le disjoncteur de protection pour courant de défaut (7) est disposé dans la zone du branchement secteur (1).

4. Dispositif de protection selon l'une des revendications 1 à 3, **caractérisé en ce qu'**un accumulateur d'énergie est disposé entre le disjoncteur de protection pour courant de défaut (7) et le dispositif de commutation (3), pour accumuler de manière temporaire une énergie électrique amenée à travers le branchement secteur.

5. Dispositif de protection selon la revendication 4, **caractérisé en ce que** sur l'accumulateur d'énergie est posé le deuxième sectionneur (9) par lequel toute arrivée de courant vers et/ou depuis l'accumulateur d'énergie peut être interrompue.

6. Dispositif de protection selon l'une des revendications 4 ou 5, **caractérisé en ce que** l'accumulateur d'énergie fait partie intégrante d'un convertisseur de fréquence.

7. Dispositif de protection selon l'une des revendications 1 à 3, **caractérisé en ce que** le deuxième sectionneur (9) est disposé dans le récepteur (6).

8. Dispositif de protection selon l'une des revendications 1 à 7, **caractérisé en ce que** le signal de commutation peut être transmis, à travers un parcours de transmission de données, du dispositif de détection au deuxième sectionneur (9).

9. Dispositif de protection selon l'une des revendications 1 à 8, **caractérisé en ce qu'**en l'absence d'un signal de commutation, la liaison électrique est coupée par le premier et/ou le deuxième sectionneur (8, 9).

10. Dispositif de protection selon l'une des revendications 1 à 9, **caractérisé en ce que** le deuxième sectionneur (9) est un sectionneur électronique.
